# EUROPEAN PATENT SPECIFICATION

(11) **EP 2 561 466 B1**
(45) Date of publication and mention of the grant of the patent: **19.10.2022**
(21) Application number: 11772581.2
(22) Date of filing: 19.04.2011
(51) Int. Cl.: H04W 4/02, A63F 13/213, A63F 13/327, A63F 13/235, A63F 13/5378, A63F 13/31, H04W 4/21, H04W 4/80, H04L 69/24, H04W 8/00, H04M 1/72412, H04M 1/72457

(54) **APPROACHES FOR DEVICE LOCATION AND COMMUNICATION**
ANSÄTZE ZUR GERÄTELOKALISIERUNG UND -KOMMUNIKATION
APPROCHES POUR LOCALISATION ET COMMUNICATION DE DISPOSITIFS

(30) Priority: 19.04.2010 US 763118
(43) Date of publication of application: 27.02.2013
(73) Proprietor: Amazon Technologies, Inc., Reno, NV 89507 (US)
(72) Inventor: BOZARTH, Bradley, J., Seattle, Washington 98109-5210 (US); KARAKOTSIOS, Kenneth M., Seattle, Washington 98109-5210 (US); HART, Gregory, M., Seattle, Washington 98109-5210 (US); FREED, Ian, W., Seattle, Washington 98109-5210 (US); BEZOS, Jeffrey, P., Seattle, Washington 98109 (US)
(74) Representative: J A Kemp LLP
(86) International application number: PCT/US2011/033109
(87) International publication number: WO 2011/133590

(56) References cited:
- US-A1- 2008 037 050
- US-A1- 2009 116 691
- US-A1- 2009 175 499
- US-A1- 2009 185 763
- US-A1- 2009 322 893

## Description

### CROSS-REFERENCES TO RELATED APPLICATIONS

This application claims priority to U.S. patent application no. 12/763,118, entitled "Approaches For Device Location and Communication," filed April 19, 2010.

### BACKGROUND

As the number of people utilizing portable computing devices increases, and as the variety of types of computing devices increases, there comes a increasing need to adapt the ways in which users of these devices communicate information. For example, users wishing to share a document often must share certain information, such as an email address or network address, in order for one user to send the information to the other. In other cases, a user must load the document onto a flash drive or other storage medium and provide that medium to the other user, whereby the user can load that document onto the other device.

Certain technologies such as Bluetooth and wireless networking (e.g., Wi-Fi) enable users to share information wirelessly, but in each case the user can still be required to obtain an identifier or otherwise enter access information in order for the devices to connect and share information. In some instances, a list of available devices might be displayed and a user can select one of the listed devices in order to establish a connection. When there are a number of devices within range, however, it often can be difficult to determine which listed device information actually corresponds to which actual physical device. Even when connections are established among a plurality of devices in a room, for example, it can be difficult to track which device belongs to which user as the users move around the room, change seats, or otherwise move with respect to a particular user device.

US 2009/0185763 discloses a portable device and photography processing method.

### BRIEF DESCRIPTION OF THE DRAWINGS

Various embodiments in accordance with the present disclosure will be described with reference to the drawings, in which:
FIG. 1 illustrates an example device including components that can be used to provide input in accordance with various embodiments; FIG. 2 illustrates an example component-level view of a device that can be used in accordance with various embodiments;
**FIG. 2** illustrates an example component-level view of a device that can be used in accordance with various embodiments;
**FIG. 3** illustrates an example layout in which a device is able to locate other nearby devices in accordance with one embodiment;
**FIGS. 4(a)-4(c)** illustrate an example interface displays representing a connection status with respect to various detected devices that can be used in accordance with various embodiments;
**FIGS. 5(a)-5(c)** illustrate example device configurations that can be used in accordance with various embodiments;
**FIGS. 6(a)-6(b)** illustrate example device configurations that can be used in accordance with various embodiments;
**FIG. 7** illustrates an example process for locating and identifying at least one of a plurality of devices that can be used in accordance with one embodiment;
**FIG. 8** illustrates an example interface display that can be used in accordance with various embodiments;
**FIGS. 9(a)-9(b)** illustrate an example of tracking movement of a detected device that can be used in accordance with one embodiment;
**FIGS. 10(a)-10(b)** illustrate a first approach to playing a multiplayer game that can be used in accordance with one embodiment;
**FIG. 11** illustrates a second approach to playing a multiplayer game that can be used in accordance with one embodiment;
**FIG. 12** illustrates an example interface enabling a user to send information to a detected device that can be used in accordance with one embodiment;
**FIG. 13** illustrates an example of an interface page enabling a user to specify aspects of a device that can be used in accordance with one embodiment; and
**FIG. 14** illustrates an example an environment in which various embodiments can be implemented.

### DETAILED DESCRIPTION

The present invention is defined by the appended independent claims. Systems and methods in accordance with various embodiments of the present disclosure may overcome one or more of the aforementioned and other deficiencies experienced in conventional approaches to interacting with various users and/or devices in an electronic environment. In particular, various embodiments enable a client device to automatically detect the presence of various computing devices or other electronic devices within a certain distance of the client device. Using an appropriate technology such as image analysis, the client device can attempt to determine a relative position of each of the devices, such as by triangulating a location of each device in one or more images captured by the client device.

For each detected device, a client device can attempt (manually or automatically) to determine whether the detected device is able to transmit and receive communications using a specific communication mechanism, such as via infrared communications. In some embodiments, the client device will send an initial signal that can be received by one or more of the devices, where the initial signal can comprise a modulated infrared signal requesting some type of acknowledgement from the detected devices. For each detected device that responds with an appropriate acknowledgement, the client device can notify a user that communication can be established with that device. Further, based at least in part upon a captured image and/or the source location of the infrared transmission, the client device can display to the user a relative location of each device, and can track movement of those devices over time.

Either as part of the acknowledgement or as part of a subsequent communication, each detected device with appropriate communication capabilities can send an identifier or identifying information for the device and/or a user of the device. In some embodiments, this identifying information will only be sent after confirmation by a user of that device. If identifying information, such as a name and occupation, of a user of the detected device is received, the identifying information can be displayed to a user of the client device. If an identifier is instead received, the client device can attempt to determine identity information corresponding to that identifier, such as by looking at stored contact information or contacting a central data store or identity service. Where available, an image of each user can be displayed on the client device in a relative orientation to the devices for those users, such that a user of the client device can quickly obtain and verify the names of each user near the client device, as may be useful in many meeting or similar settings.

Once communication mechanisms have been established for detected devices, the client device can share information with particular devices. For example, a user can select an icon on a display screen corresponding to one of the detected devices, and can cause a file to be copied to that device. In some embodiments, the file can be transferred using the initial connection mechanism (e.g., modulated IR radiation), while in other embodiments the file can be transferred using another mechanism, such as Bluetooth or Wi-Fi communications. An identifier or other information used to establish the communications can be received using the initial connection mechanism, and the communications can be established automatically (or manually) on the client device.

The image capture element(s) of the client device can periodically (or continually) determine the relative position of each detected device, in order to determine movement of any of the devices. For any detected movement, the relative positions displayed on the client device can be updated. Using such an approach, a user of the client device can quickly determine the identity of any attendee of the meeting based on the displayed information even if the user or an attendee changes location, as the displayed information will adjust position accordingly.

Such technology can provide advantageous functionality in any of a number of different situations. For example, a user attending a meeting does not have to collect business cards and then enter the data, as the information can all be received automatically from the respective devices, without the user having to set up communications or connections with those users, transfer email addresses, or otherwise manually exchange information or configure settings for those users.

In a social setting, a user of a client device can quickly obtain the names, interests, or other information about the nearby users, and in some cases can quickly add users to social networking sites, join in games, pick teams, exchange media playlists, or perform any of a number of other types of activities without potentially having to do any more than select an image, icon, avatar, or other representative element on the client device, where the client device automatically located the user device, determined an identity of the user, and set up a communication channel or mechanism.

In a classroom setting, a teacher can automatically take attendance by tracking which user devices are present in the classroom, regardless of whether the students are in their correct seats. A teacher can administer a test or ask questions using the device, and students can ring in or provide answers using their devices. An image of each student can appear in their relative location such that a substitute teacher can determine whether students are sitting in the proper seats, taking the proper test, or performing another such activity.

In some embodiments, users can participate in games where the relative position of the user is an input to the game or otherwise affects game play. In embodiments, a user can move a device up, down, across, or in any other appropriate direction as necessary to provide positional input to the game. The user also can perform specific movements, such as to swing the device to hit a ball or tilt the device to put a spin on the ball. In some cases, one user might be able to see the relative position of each of a number of players on a client device, while the other players see only their respective views. Such a configuration can be useful for an army general or dungeon master, for example, who can base decisions on the relative positions of the other players.

Various other applications, functions, and advantages are presented below with respect to the various embodiments. It should be understood that the description and figures provide a number of examples, but the alternatives and variations possible within the scope of the various embodiments are not fully described. There alternatives and variations, however, would be apparent to one of ordinary skill in the art in light of the teachings and suggestions contained herein.

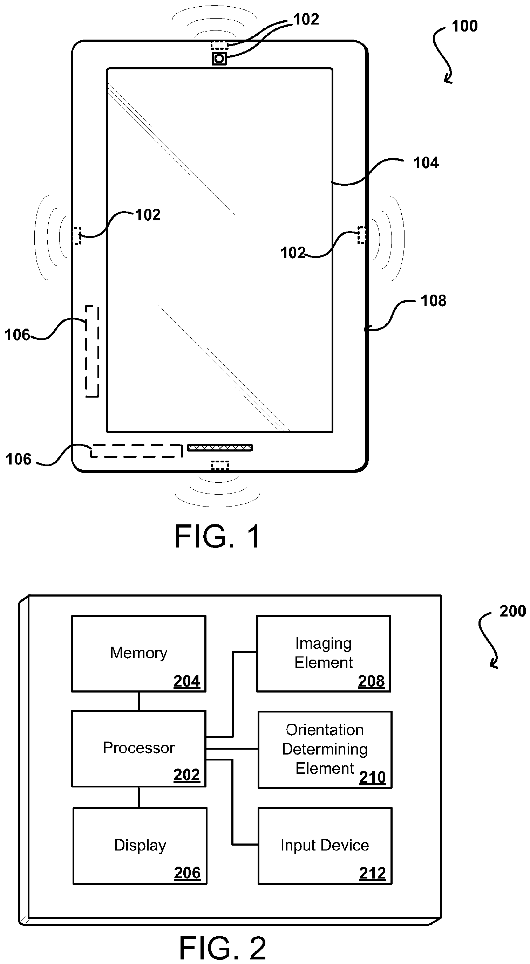

**FIG. 1** illustrates an example of a portable computing device **100** that can be used with various embodiments discussed herein. For purposes of explanation, the primary portable computing device described will be referred to as a "client device" that is able to detect and communicate with other devices. The example client device presented is a portable computing device that includes conventional computing elements, such as a processor and memory as discussed below, as well as at least one display element 104. The display element can comprise a display screen, touch-sensitive or otherwise, which can display various graphical elements as part of a graphical user interface (GUI). A GUI can enable the user of the client device to input various characters or text, select various elements or commands, or provide another such input, using various approaches discussed herein and known in the art for such purposes. The client device can include various other input elements, such as at least one orientation-determining element **106** *(e.g.,* an accelerometer or gyro element) that can be used to determine orientation, motion, or other movement or changes in orientation of the client device. The client device also can include at least one other conventional input mechanism, such as one or more pressable buttons positioned at any appropriate location on the device, such as on the bottom front as in conventional devices (*e.g*, as part of a keyboard or keypad), or on the side or back of the device such that a user holding would likely be able to press or otherwise activate the button(s) without having to substantially shift hand position. Various other input elements can be used as well as known in the art of subsequently developed, such as audio input using a speaker element, etc.

The device also can include at least one image capture element **102** *(e.g.,* a digital still camera or video camera) for capturing image information in any particular direction with respect to the device. In various embodiments, a client device **100** can include multiple image capture elements **102,** at least one of which can comprise an infrared emitter and detector (e.g., an IR transceiver), operable to transmit and/or receive infrared radiation. In the example client device of **FIG. 1****,** there are six image capture elements, with one image capture element on each of the four sides of the device, one on the front of the device, and one on the back (not shown). The six element configuration enables the client device **100** to capture images in substantially any direction around the device. When using standard image capture techniques, there might be a limited transmit and/or capture angular range, such that there can be "blind spots" where the device cannot image completely. In other embodiments, however, each image capture element can include at least one appropriate wide-angle optical element, such as a fisheye lens, that increases the angular spread of the capture element and enables the device to image substantially any region around the device. The imaging element(s) can be positioned on the device in locations that are least likely to interfere with the user's comfortable operation of the device.

**FIG. 2** illustrates a set of basic components of a computing device **200** such as the client device **100** described with respect to **FIG. 1****.** In this example, the device includes a processor **202** for executing instructions that can be stored in a memory device or element **204.** As known in the art, the device can include many types of memory, data storage, or computer-readable media, such as a first data storage for program instructions for execution by the processor **202,** a separate storage for images or data, a removable memory for sharing information with other devices, etc. The device typically will include some type of display element **206,** such as a touch screen or liquid crystal display (LCD), although devices such as portable media players might convey information via other means, such as through audio speakers. As discussed, the device in many embodiments will include at least one imaging element **208** such as an ambient light camera or infrared transceiver. The imaging element can include any appropriate optical elements useful in providing sufficient angular spread, focal range, and viewable area to capture images of a user of the device, an intended target, and/or devices positioned around the device within a given range. Methods for capturing images using one or more image capture elements with a computing device are well known in the art and will not be discussed herein in detail. It should be understood that image capture can be performed using a single image, multiple images, periodic imaging, continuous image capturing, image streaming, etc. Further, a device can include the ability to start and/or stop image capture, such as when receiving a command from a user, application, or other device.

As discussed, the device also can include an orientation detection element **210** able to determine and/or detect orientation and/or movement of the device. Methods for using elements such as accelerometers to determine orientation or movement of a device are also known in the art and will not be discussed herein in detail. In some embodiments the device can include at least one additional input element **212** able to receive input from a user. This input element can include, for example, a push button, touch pad, touch screen, touch-sensitive material, wheel, joystick, keyboard, mouse, keypad, or any other such device or element whereby a user can input a command to the device. Some devices also can include a microphone or other audio capture element that accepts voice or other audio commands. For example, a device might not include any buttons at all, but might be controlled only through a combination of visual and audio commands, such that a user can control the device without having to be in contact with the device.

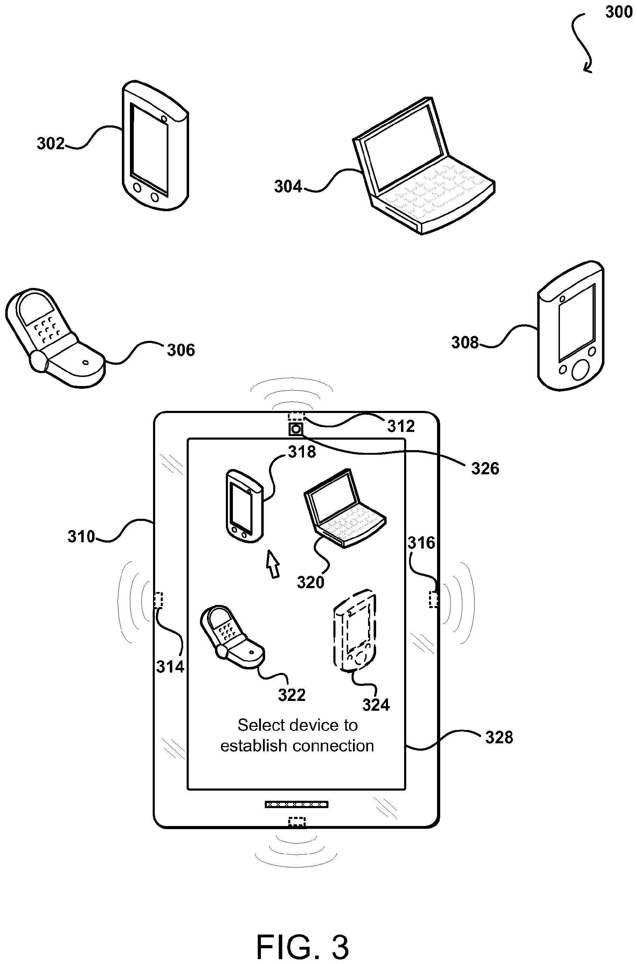

**FIG. 3** illustrates an example configuration **300** wherein As mentioned, a portable computing device **310** *(e.g.,* a client device) is within a given distance of a number of other computing devices, including in this example an electronic book reader **302,** a notebook computer **304,** a cellular phone **306,** or a portable data assistant (PDA) **308** as illustrated in the example configuration **300** of **FIG. 3****.** If the client device has at least one image capture element positioned on any side at least partially facing those computing devices, the client device can capture at least one image of each of those computing devices. For example, the "top" image capture element **312** and "left" image capture element **314** in the figure might each be able to capture an image of at least part of the cellular phone **306** and/or electronic book reader **302.** Similarly, the top image capture element **312** and right image capture element **316** might each be able to capture at least one image including at least a portion of the notebook computer **304** and the PDA **308.** Depending upon the tilt angle at which the user is holding the client device **310,** or at which the client device is otherwise positioned, a front image capture element **326** or back image capture element (not shown) might be able to image some if not all of the nearby devices.

For each computing device appearing in at least one image captured by at least one imaging element of the client device **310,** an algorithm executing on the client device (or remote to the client device) can determine an approximate direction of the location of each device relative to the client device **310.** For example, an image captured with the top capture element **312** in this example might show a relative location of each of the four computing devices shown. Based at least in part upon this image, the algorithm can determine an approximate direction of each device with respect to the current orientation of the client device **310.**

Further, at least one algorithm executing on the client device (or remote to the client device) can attempt to approximate a distance from the client device **310** to each of the detected devices. For example, a first algorithm can determine the size of the electronic book reader **302** in one of the images, and based on the size that the book reader appears in the image, the algorithm can approximate the distance to that device. In some embodiments, the client device might be in communication with an image recognition service (or other such source) that is able to analyze a captured image including the electronic book reader **302,** and determine a likely type and/or model of the book reader. In some embodiments, information identifying a model or type of device might be contained in a label on the device or sent as part of a transmission from the device. Based at least in part upon this information, an algorithm can correlate the size of the particular model of device, for example, with the apparent size of the device in the image, in order to more accurately determine a distance to the reader **302.**

In embodiments where at least two imaging elements capture images showing a relative location of the electronic book reader **302,** at least one algorithm can analyze the combined images in order to attempt to perform triangulation or another similar process for determining the relative location of the reader **302.** For example, the device can analyze an image of the reader **302** taken with the top capture element **312** and an image taken with the left capture element **314** and determine a relative size and direction from each image. By combining the relative sizes between the two images, the device can determine the approximate distance to the electronic book reader **302.** Further, while either image can determine the approximate direction to the electronic book reader **302,** there can be optical artifacts or other aspects introduced by relatively inexpensive wide angle optics such that a combined determination using images from at least two elements can improve the accuracy of the determination. The client device can perform similar calculations for at least a portion of the devices appearing in images captured by the device, in order to determine approximate locations of each processing device within a given distance of the client device. In at least some embodiments, an image analysis process also can be used to identify specific types of devices, such that the device only attempts to determine the relative location of specific devices, and would not necessarily attempt to locate devices such as portable media players or video game controllers (although in some embodiments these devices might be included as well).

**FIG. 3** illustrates that the client device **310** can present to a user, via at least one display element **328,** a relative position of computing devices detected to be near the client device **310.** In this example, a cellular phone icon **322** or image is displayed in a location on the screen that corresponds to a relative location of the cellular phone **306,** an electronic book reader icon **318** appears in a location that corresponds to a relative location of the electronic book reader **302,** a notebook icon **320** designates a relative position of the notebook computer **304,** and a PDA icon designates a relative position of the PDA **308.** In some embodiments, the icons will be actual images of the various devices cropped from images captured by the client device. In embodiments where the type of device is recognized, the icons could include images of the type of device, as may be retrieved from a central data store or other such location from across a network or stored on the client device.

In at least some embodiments, at least a portion of the other computing devices will also include at least one image capture element, such as an infrared transceiver (combination transmitter and receiver). If the client device **310** has at least one infrared receiver capable of receiving a transmission from an infrared transmitter of one of the computing devices, the client device can notify a user of the device that it is possible to establish a communication channel, session, handshake, or other arrangement whereby communication can be accomplished based at least in part upon information received via infrared signals. It should be understood, of course, that infrared signals are used for purposes of explanation, and that any other appropriate type of signal can be used in accordance with the various embodiments.

In one embodiment, a client device includes one or more infrared light-emitting diodes (LEDs) in combination with one or more optical elements (e.g., a glass or plastic lens) to emit focused infrared radiation for short-range communication. The device can conform to an appropriate transmission standard, such as the standards set forth by the Infrared Data Association (IrDA). The client device can include at least one optical modulator operable to modulate the infrared beam from at least one IR LED in order to encode data within the generated beam. The client device can also include at least one photodiode or similar element operable to receive transmitted IR radiation, which can be demodulated in order to extract the information encoded into the received signal.

**FIG. 3** illustrates the example case wherein the client device, either as part of the initial device detection process or as part of a separate process, has determined that the electronic book reader **302,** notebook computer **304,** and cellular phone **306** are each able to communicate using infrared communication (or at least one other designated type of communication). In some embodiments, the client device might also determine whether those devices are able to communicate according to at least one protocol using information obtained through that communication mechanism. For example, the client device might send out at least one code via an infrared signal asking for a confirmation from each detected device having the appropriate communication technology. If the devices respond with an appropriate code or message (e.g. a confirmation or identifier) then the client device can determine that it can communicate with those devices using the infrared signals.

In some embodiments, a user can provide certain other users with a code that the users can enter into their respective devices. This code then can be broadcast with each communication from the devices having that code, such that only certain devices can communicate with each other even though multiple other devices might receive the transmissions, as the other devices would not have the code needed to decode the information in the transmissions. The code can be provided via any appropriate approach, such as email, instant messaging, social networking, file transfer, or voice communication.

Once the client device has determined that it can communicate with one of the detected devices using infrared signals, for example, the client device can inform the user of that ability. As illustrated in **FIG. 3****,** there can be a particular state for each icon **318, 320, 322** corresponding to a device that is determined to be able to communicate via infrared signals. In this example, the state can be a color state, highlighted state, animated state, or any other state differentiating those icons from other icons displayed on a display element **328** *(e.g.,* display screen) of the client device **310.** The icon **324** corresponding to the PDA device **308** is shown to be in a different state, such as a black and white state, grayed out state, or other state indicating that the PDA device has not been determined to be able to communicate via infrared signal. Various other approaches for communicating the state of each device can be utilized as well within the scope of the various embodiments.

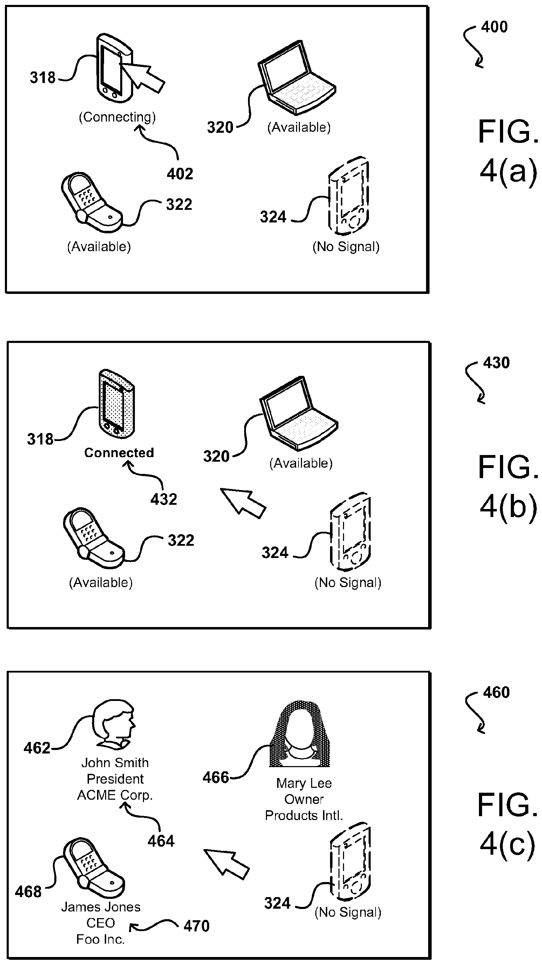

For each device indicated in the display to be capable of communicating via infrared signals (or another selected technology), the user of the client device **310** can have the ability to initiate a communication, or prevent communications, with that device. **FIG. 4(a)** illustrates an example display state **400** wherein the user has moved a selection element (e.g., a cursor) to select the icon **318** corresponding to the electronic book reader **302** in order to attempt to establish a connection. It should be understood that reference numbers are carried over between figures to identify similar elements for purposes of simplicity of explanation alone, and this should not be interpreted as limiting the scope of the various embodiments or showing various options as part of the same embodiment. In other embodiments, the user could touch the icon using a touch screen or perform another such selection action. As illustrated, the device can display a connection state for the icon, such as "connecting" or a similar message or indicator. Similar state information can be displayed for the other icons / devices as well, such as an "available" state for the notebook icon **320** and cell phone icon **322,** where those devices are able to communicate but do not yet have a connection established, and a "no signal" or similar state for the PDA icon **324,** where the client device has not yet been able to detect an appropriate signal from that device. If the user performs an action to exclude a device from communications, such as by right clicking on an icon for the device and selecting an appropriate option, or by dragging the icon to a trash bin icon, the device can prevent communication with that device, such as by adding an identifier for that device to a blacklist stored on the client device.

In some embodiments, a user selecting an icon corresponding to a detected device causes the client device to emit a particular signal via the infrared emitter (or other such communication element). In some embodiments this corresponds to a basic "wake up" code, while in other embodiments this could correspond to a "please acknowledge" or "please identify yourself' code. Any appropriate encoding approach can be used as known or subsequently developed for transmitting information over a signal such as an infrared signal. In some embodiments, the client device emits the signal using at most the number of emitters which are facing the sleeted device, and in some embodiments the signal is emitted using only the emitter from which the selected device is most likely to receive the coded signal. When the selected device (here the electronic book reader **302)** receives the coded signal, the reader will decode the signal and determine the contents of the request. In some embodiments, the reader **302** can automatically respond with a message. In other embodiments, the reader **302** will prompt a user to that device to first confirm the request or otherwise approve the sending of a response from the reader **302.**

In some embodiments, the book reader will simply send an "acknowledge" or similar code back to the client device. It is possible that multiple devices will detect the request sent from the client device and might wish to respond. In some embodiments, therefore, each electronic device responding to the request can send identifying information which can help the client device to distinguish responses from various devices. For example, going back to **FIG. 3** it can be seen that a signal emitted from the left emitter (e.g., imaging element **314)** might be picked up by the cellular phone **306** in addition to the electronic book reader **302.** When a response is received from the selected device, the corresponding information displayed on the device can be updated, such as is illustrated in the example display state **430** of **FIG. 4(b)****,** wherein the icon **318** for the selected device has changed in appearance (e.g., color or size) and/or updated state information **432** is displayed, indicating that a handshake or other connection action occurred.

If a simple acknowledgement response is used, however, it is possible that the client device could receive acknowledgement responses from each of those devices **302, 306.** In some embodiments the client device will be able to determine that the electronic book reader **302** sent an acknowledgement based on the position from which the signal was transmitted. If the client device wishes to communicate back and forth with just the book reader **302,** however, it would be desirable to be able to somehow identify communications directed to that particular device.

Approaches in accordance with various embodiments thus require electronic devices responding to such a request to include some type of identifier, such as a client identifier, user identifier, etc. In this way, the client device can decode the information received from the intended device (here the book reader **302)** based at least in part upon the direction from which the signal was received, as determined by at least one capture element of the client device **310,** and the determined relative positions of each detected device. In this way, the client device can associate not only a particular relative location with a detected computing device, but also can associate some identifying information with that device.

In some embodiments, a computing device such as the book reader **302** can also send information that provides specific detailed information about a user of the device, such as a current user who is logged into a device or the owner of that device. For example, the computing device can transfer information such as name, employer, occupation, or other information that might be transmitted during a business meeting, such as might be typically conveyed using a business card. It should be understood, however, that any appropriate information can be transferred using such a process, such as a gamer tag in a video game community, social networking information, and the like. This information can be sent as part of an initial set of communications, or can be obtained during a subsequent exchange based at least in part upon a request by one of the parties (e.g., the user of the client device receiving the information or the user of the book reader transmitting the information).

In other embodiments, the initial identifier sent by a device *(e.g.,* a user identifier or device identifier sent by the book reader **302)** can be used to obtain the specific user information. In one example, the identifier can be referenced against contact information previously stored on the device. In another example, the identifier can be submitted to a remote service that stores information for such purposes. In some embodiments, the identifier can correspond to a uniform resource locator (URL) identifying a location from which the information can be obtained. In other embodiments, the identifier might include information that can assist in locating user information by performing a search of a resource such as the Internet. Various other sources of identifying information can be used as well as should be apparent.

When identifying information is obtained, that information can be displayed (or available for display) to a user of the client device. For example, **FIG. 4(c)** illustrates an example display state **460** wherein user information was obtained for each of the three devices to which the client device was able to establish communications via the infrared approach discussed above. As can be seen, the icons for two of the connected devices were replaced with images of the respective user **462, 466,** which can help a user of the client device not only to confirm that the user is the expected user of each device, but can help the user in a meeting or similar setting to identify people in the meeting. The images can be determined using any of the identity-determining approaches discussed above. If an image of the user cannot be located, an image of the respective device (or other appropriate image) can be displayed, or the device can continue to show the original icon **468** as illustrated for the cell phone **306** in **FIG. 4(c)****.**

The interface on the client device also can display other information for each user, which can vary between embodiments. Further, the user can have the option to select the types of information displayed. For example, in a business meeting the user might select to show the name of the company and title of each identified user, as illustrated in the example information **464** displayed for the user of the book reader 306, as well as other appropriate information such as how much business they do with the user's company, their company's sales information, etc. In a social setting, however, the user might prefer to show information such as the user's hobbies, the names of each user's family members, or other information more useful in a social setting.

The displaying of identifying information as illustrated in **FIG. 4(c)** can have several advantages. For example, a user of the client device can see identity information for each identified user in the room or nearby location, which can help with tasks such as remembering the names of people who are being met for the first time. The images also can help a user to keep track of users who move around the room, leave temporarily, etc. Further, when a user of the client device wants to interact with a specific device, such as to send a file to a particular user, the interface can help ensure that the user of the client device sends the file to the intended user.

Such an interface can provide other options as well. For example, a user can have the ability to select an icon or image to obtain more information about a particular user. In one example, a user can select an image of another identified user and a pop-up screen will appear on the client device that includes any appropriate information for that identified user, such as a personal bio, performance history, or list of recent articles. In another example, a user will be able to exclude certain users from receiving information from the client device. For example, if a user of the client device is giving a presentation and the identify of a competitor is displayed on the device, the user can select that competitor via the display to prevent that user from receiving certain information. In other cases, the competitor can be somehow identified, such as being highlighted in red or otherwise distinguished, such that the user can adjust how much information is shared during the meeting. Various other options can be provided as well as should be apparent in light of the teachings and suggestions contained herein.

In order for the client device to properly locate and identify the devices associated with these users, as discussed above, the client device needs to be able to image or otherwise obtain information about the devices. As discussed above, this can involve a client device having one or more image capture elements positioned at appropriate locations on the device. Depending at least in part upon the type of image capture element and the intended use, there can be a number of potential variations and configurations used to capture information about nearby devices. As discussed previously with respect to **FIG. 3****,** there can be a camera on each side of the device, such that a substantially rectangular device can have six cameras in certain embodiments, although there could be more than one element on a side or there can be at least one side that does not include an image capture element. For example, a "bottom" edge of the device (e.g., the edge facing the user when the user is operating the device) might not include an image capture element in certain embodiments as the image capture element from that side might be unlikely to pick up devices that were not able to be captured by an element on one of the adjacent sides.

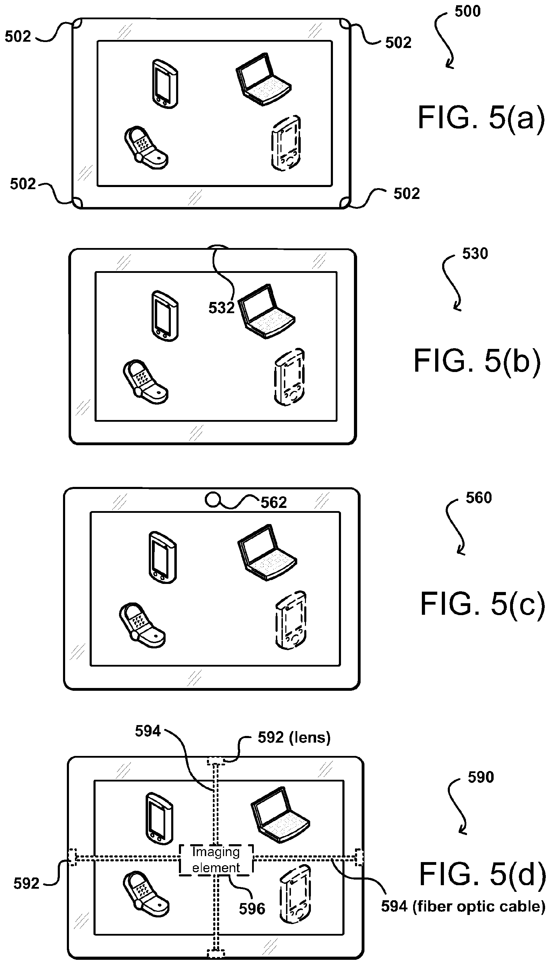

**FIG. 5(a)** illustrates an example configuration wherein a client device **500** includes four capture elements **502,** each positioned on one of the corners of the device. In some embodiments such an arrangement will enable the capture elements to capture images of devices in any direction around the device, except that there might be dead zones or blind spots near the edges of the device. In other embodiments, the image capture elements can use wide angles lenses (e.g., fisheye lenses) that have an angular view of about 180° or more, which can minimize the presence of blind spots near the device. In the device **530** illustrated in **FIG. 5(b)****,** a single image capture element **532** with a wide-angle lens can be used that can detect any device that is at least partially in "front" of the client device (depending upon the angle of the client device). Such a device can be less complex and less costly than other approaches, as a single image capture element (e.g., infrared transceiver) can be provided for communications and/or detection purposes. **FIG. 5(c)** illustrates an alterative configuration wherein a client device **560** includes a single image capture element **562** positioned on a face of the device that faces a user during standard operation. Using such a configuration, a user placing the device on a table or otherwise placing the device in a substantially horizontal orientation will be able to detect devices in a 360° view around the client device (as long as those devices are not "below" the viewable angle of the image capture element). The image capture element can contain more than one lens or optical element in some embodiments, in order to improve viewing angle, minimize optical defects or artifacts due to the wide viewing angle, or perform a similar function. When wide angle lenses are used, the algorithm used to determine relative location of devices can be configured or selected to take into account any distortion of perspective near the edges of the captured image. For each type of lens, there can be a relative mapping of actual position versus viewing position in the image, where the difference in position in the image will not be a linear function of the actual change in position.

Certain devices might not use wide angle lenses, such that each image capture element will have a limited angular range. In some embodiments, optical elements might actually be included to focus the angular range of the image capture elements. For example, a user of a client device might want to communicate information that can only be detected by a particular device. Even where codes are used, other devices receiving a transmission can store the information and eventually break the code, thereby obtaining access to the transmitted information. Thus, it can be advantageous in some embodiments to minimize the angular range of the various elements.

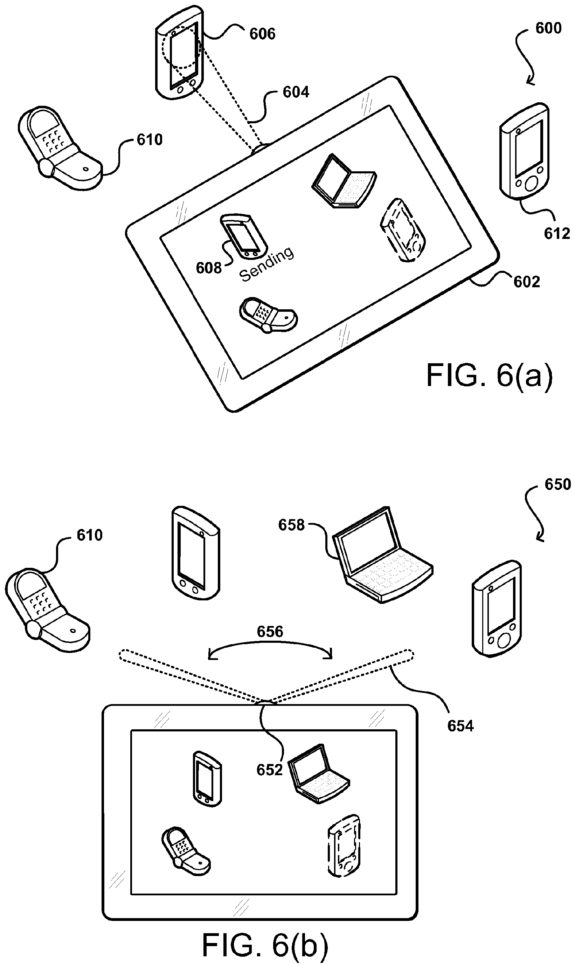

In some embodiments, the communications might not utilize or require identifiers or other coded information. For example, if users of two devices want to share content, play a game, or otherwise interact, there might be no need to exchange identifying information as the devices can communicate based on relative location. For example, **FIG. 6(a)** illustrates an example configuration **600** wherein a client device **602** includes an image capture element **604** with a limited angular range **604.** In order to communicate with a particular device **606,** the user of the client device must ensure that the client device is pointed at a current location of that device **606.** As long as the client device **602** and selected device **606** are within each other's angular range, those devices can communicate without the need to first send identifying codes, although codes can still be exchanged in certain embodiments. An advantage to such an approach is that other devices **610, 612** that might be nearby will not be able to receive the transmission from the client device **602** to the selected device **606.** If the user of the client device wants to share information with those other devices **610, 612,** the user can point the client device at each of those devices and resend the transmission. Such an approach can provide a level of security, but can introduce some redundancy when information is to be shared among several devices.

In some embodiments, the device can include the ability to view over a wide angular range, but communicate over a limited angular range. **FIG. 6(b)** illustrates an example client device **650** including a image capture element **652** that is able to scan a viewing area with a limited angular spread **654** over a wide angle **656,** either in a plane or within a hemisphere, for example. Using such a configuration, the client device **650** can provide a "detection" mode wherein the image capture device periodically (or continually) scans the area around the client device **650** in order to detect nearby electronic devices and determine an approximate current location of each device. The device also can provide a "communication" mode where the image capture element can be focused to communicate with a particular device. For example, during detection mode the client device could detect both the cellular phone **610** and the notebook computer **658,** but during communication mode the client device could adjust the image capture element **654** such that the cellular phone **610** will not be able to detect transmissions between the client device and the notebook computer, as the cellular phone **610** will be outside the angular range **654** when that range is focused towards the notebook computer. As discussed, such an approach enables communication without identifier codes, or can be used with identifier codes but can prevent other devices from receiving and decoding the transmissions.

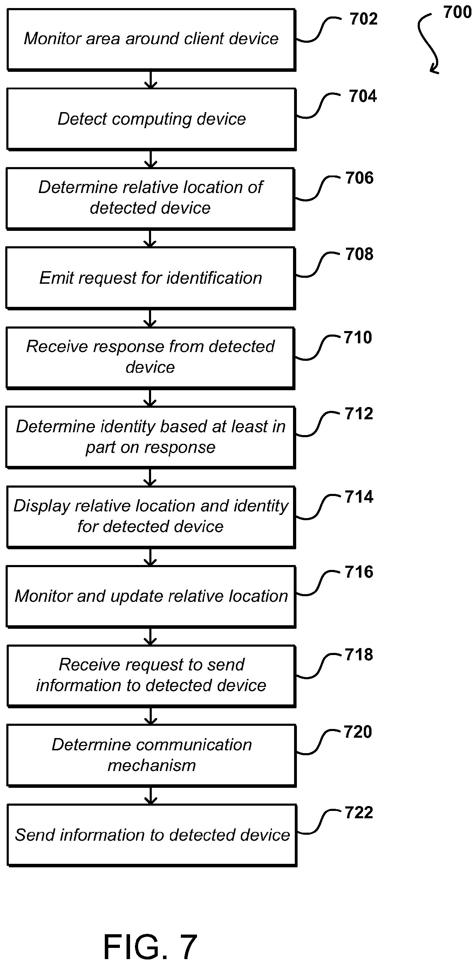

**FIG. 7** illustrates an example process for detecting, locating, tracking, and communicating with at least one nearby device that can be used in accordance with various embodiments. In this example, a client device begins monitoring the area surrounding the client device **702.** The monitoring can begin automatically, or upon request of the user or another appropriate source. At some point, the client device can detect the presence of at least one nearby computing device **704.** The detection can involve any process discussed herein, such as image recognition based on ambient light or infrared radiation. The client device can determine the relative location of each detected device **706,** such as by using image analysis and/or triangulation to determine a direction and relative distance to each device. The client also can emit a request for identification **708,** which can be emitted using at least those emitters facing at least a portion of a detected device. The client device then can receive a response from at least one of the detected devices **710.** As discussed, in some embodiments the other devices might emit heartbeats or send other signals that are received by the client device, such that the client device does not need to emit a request for identification. There also can be combinations where the client device needs to obtain information for only some of the devices, as the client device has already received information for one or more of the detected devices.

The response from the detected device can include at least one identifier, and potentially additional identity information for a user of the device or the device itself. Based at least in part upon the information received in the response, the client device can determine an identity for the detected device **712.** As discussed, the identify of the user or device can be sent with the information, or an identifier can be used to obtain the information from another source. The client device then can display identity information for each device (where available) and a relative location of each device to a user of the client device **714.** The client device can periodically communicate with, or capture images of, the detected devices in order to monitor a current location of each detected device **716.** If a user of the client device wishes to share information with a specific detected device, or otherwise send a communication to at least one specific device, the client device can receive a selection from the user specifying at least one device to which to send the communication **718.** For each selected device to receive the communication, the client device can determine an appropriate communication mechanism **720.** This can include determining an identifier for each device, as may have already been received, as well as a communication mechanism that utilizes that identifier. The available communication mechanisms can be received from the other device, obtained using the identifier, or otherwise determined. For example, if the identifier corresponds to a type of device, the client device might be able to determine the available communication mechanisms for that type of device. The client device then can send the communication to each selected device **722,** without the user ever having to manually receive or provide information, enter connecting information, or otherwise manually enter user or device-specific identity information necessary for the transmission.

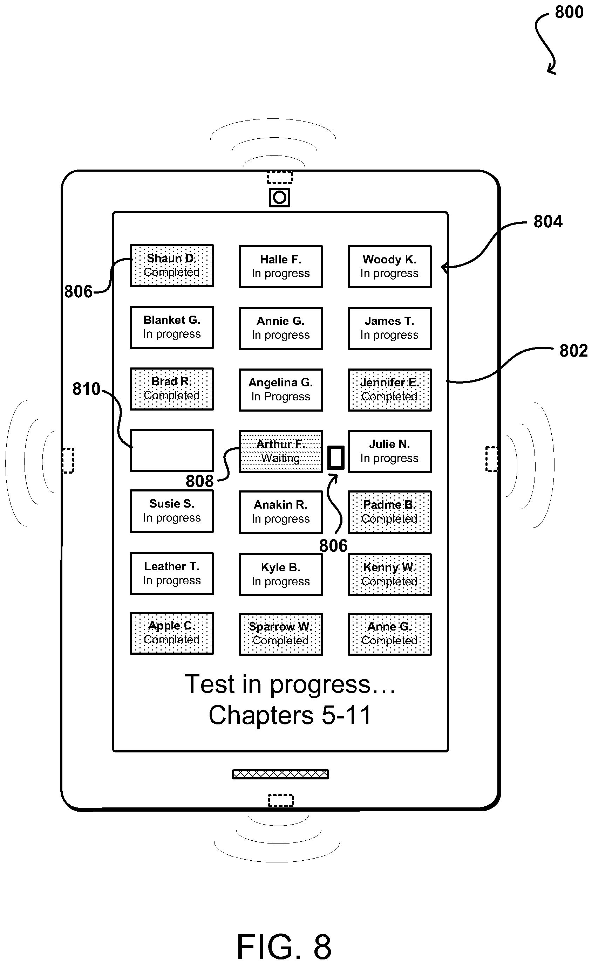

In addition to some of the basic functionality discussed above, approaches in accordance with various embodiments provide additional uses and features that can be advantageous for a variety of different users. For example, **FIG. 8** illustrates an example interface state on a client device **800,** corresponding to a teacher operating a client device in a classroom full of students taking a specific test. The client device **800** in this example is able to detect devices a full 360° around the device. Before the test is administered, the client device can detect a computing device corresponding to each student and/or desk location in the classroom. An identifier can be obtained for each of these devices, such that the teacher can verify an identity of each user of each device, which can help to prevent cheating among students. Icons **804** can be displayed on a display screen **804** of the client device **800** for each detected device, with information such as the name of the associated student. Using any appropriate communication protocol, the teacher can cause the test data to be transmitted to each of the devices. Status information can be received from each of the devices indicating when the data has been received. If a student's device has not yet received the test data, a particular icon or icon state **808** can be displayed indicating that the user has not received the data (e.g., due to a problem with the user device) and that the teacher should not yet start the test.

When each device has the test data, the teacher can issue a command via the client device **900** that can cause the test to begin on each device. The user devices can periodically send status information in some examples, such that the status can be displayed with the various icons and the teacher can ensure that each user is working on the test. When a student completes the test, a signal can be transmitted from the student's device to the client device **800,** and a new icon or icon state **806** can be displayed showing that the student has completed the test. When all the students have completed the test, the teacher can collect all the data (if not already collected) and close out the test, such that the icons for each student can go back to a default or other such state.

Such a device also can help with various other tasks. For example, a teacher can take attendance simply by brining the client device into the room and having the client device detect the various student devices (e.g., where bringing the student devices to class is mandatory). If a student is absent, a special icon **810** can be displayed indicating to the teacher that the student is missing. Information also can be stored such that when the student is next in class, any information that the student missed can automatically be transmitted to that student's device.

An advantage to the example illustrated in **FIG. 8** is that the teacher can move about the room and still view the status of each of the students. **FIG. 8** illustrates an icon **806** for the client device that shows a current location of the device relative to the student devices. Although the client device is shown in this example to be able to move relative to the student devices in the display, it should be understood that in other embodiments the client device icon might remain stationary and the relative position of the other devices can change.

The ability to move while still monitoring other devices can be provided in a number of different ways. In a first approach, the captured image information for each of the devices can be analyzed to determine the relative change in position. In many cases, however, it can be difficult to determine whether the change in location is due to movement of the client device, movement of the detected device(s), or a combination of both. In some embodiments, the device can include image analysis software that attempts to track differences in background portions of the image to attempt to determine movement of the client device. As mentioned with respect to **FIGS. 1** and **2****,** certain client devices can include orientation or movement-determining elements such as accelerometers or gyro elements. These elements can detect motion of the client device, and can help to determine whether the relative movement of a detected device is due to movement of the detected device or the client device. For example, in **FIG. 8** where the user devices will remain primarily stationary at the desk locations, the client device can determine that the changes in relative position are due to movement of the client device, and can update the displayed locations accordingly.

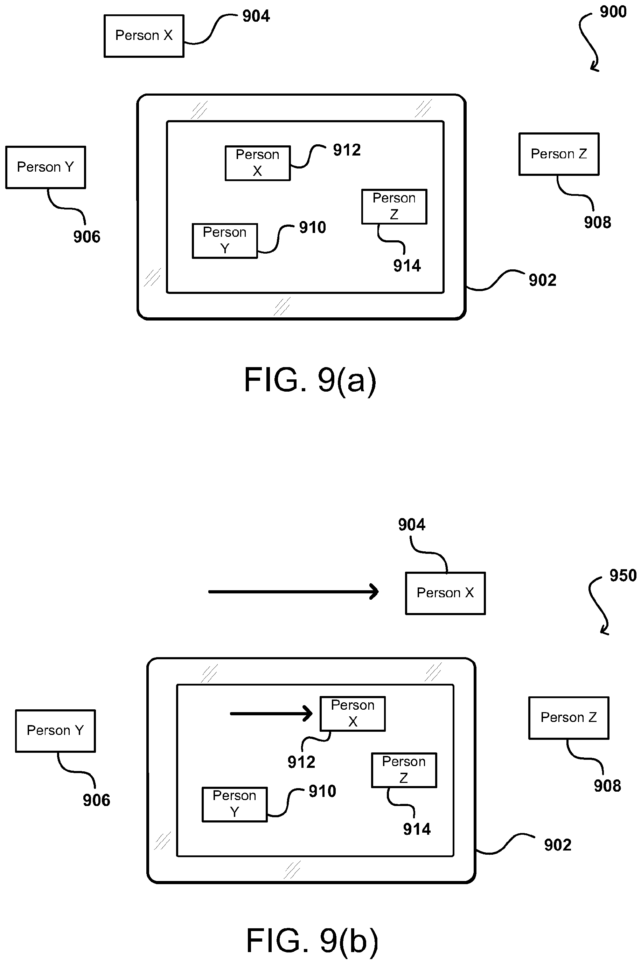

In other instances at least one of the user devices might move relative to the client device, and it can be desirable to update the relative position of the user device(s). **FIG. 9(a)** illustrates an example arrangement **900** wherein the relative locations of three different user devices **904, 906, 908** are determined relative to a client device **902.** The relative positions of these devices are presented to the user as a set of arranged icons **910, 912,** and **914,** respectively, as discussed previously. In a situation such as a meeting, it is possible that a user such as Person X will change seats, such as to get a better view of a presentation or for some other such reason. The client device **902** can detect the motion of the user device **904** associated with Person X, the motion being represented in the configuration **950** of **FIG. 9(b)****.** The tracking of the position of the user device **904** can be performed using any of a number of approaches discussed herein, such as to update the position based on the relative location imaged in subsequent images captured using at least one image capture element of the client device. In some cases, there can be an identifier (e.g., a bar code or symbol) on each device that assists with tracking in subsequent images, while in other embodiments image recognition is performed to identify specific devices or users. In some embodiments, each device might send a periodic infrared signal, such as a heartbeat message, that indicates to the client device (and any other devices listening for those heartbeats) the current position of a specific device. Each heartbeat message can include any appropriate information, such as an identifier originally sent to the client device. Various other approaches can be used as well as discussed elsewhere herein. The detected movement of the user device **904** can be conveyed to a user of the client device **902** by updating a relative position of an icon or image **910** representing the relative location of that user device as displayed by the client device. The client device can also detect and convey that the relative positions of the other devices **906, 908** have not significantly changed.

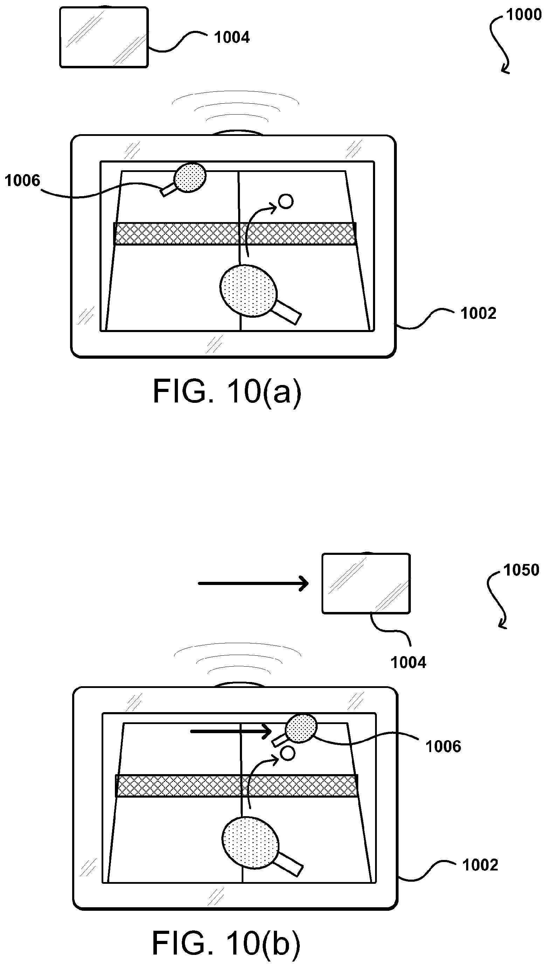

The ability to track relative movement between devices can be used as input for a number of different applications other than those previously discussed. For example, **FIGS. 10(a)** and **10(b)** illustrate an example where the relative positions of the devices can be used as input for a position-dependent aspect of a game or similar application. In this example, a gaming application is executed on both a client device **1002** and a competitor device **1004.** As discussed above, the devices can identify each other using infrared or a similar technology, and track the relative positions using that technology. Other communication approaches (e.g., Wi-Fi or Bluetooth) can be used for other aspects of the application as discussed elsewhere herein. **FIG. 10(a)** shows a player icon **1006** having a relative position on the screen of the client device **1002** that substantially corresponds to the relative position of the competitor device **1004.** In this example, each player has a player icon corresponding to a paddle that can be used to hit a ball across a net. In **FIG. 10(a)****,** the player of the client device hits the ball in a direction away from the icon **1006** for the competing player. In order to hit the ball, the competing player must move the competitor device **1004** in the appropriate direction to move the relative position of the competitor icon **1006** displayed on the screen of the client device **1002,** as illustrated in **FIG. 10(b)****.** As should be apparent, the display screen on the competitor device **1004** likely will show a gaming image that is a mirror view of what is displayed on the client device. The competing user can move the competitor device **1004** to the appropriate location and then can perform another input to hit the ball, such as to press a button, interact with a touch screen, or swing the competitor device **1004.** In order to compensate for movement of the client device **1002,** the competitor device **1004** also can utilize an accelerometer or other element discussed herein to differentiate relative motion of the client device **1002** and the competitor device **1004.**

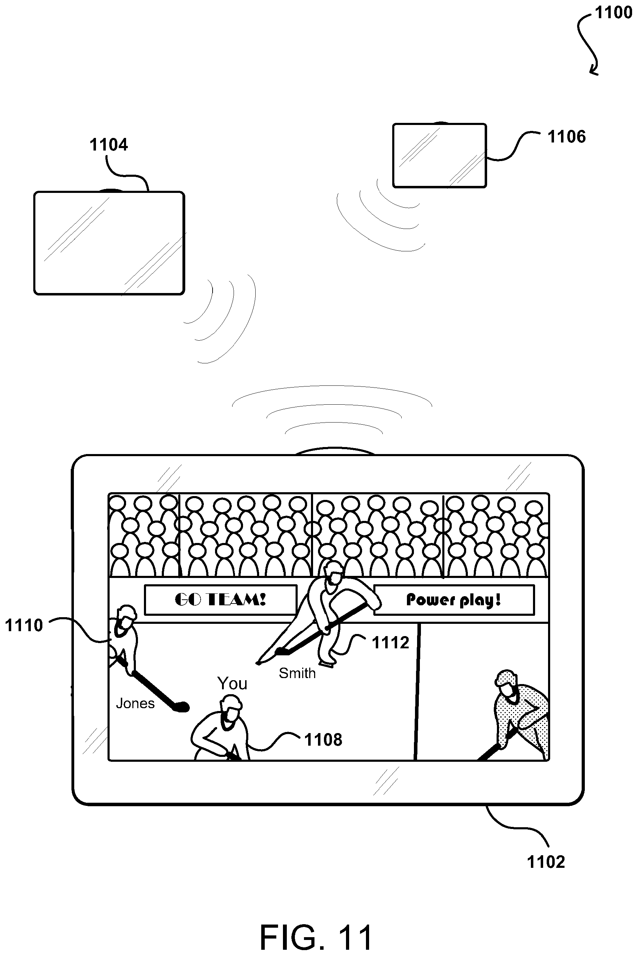

**FIG. 11** illustrates another example application taking advantage of the determined relative position of other player devices **1104, 1106** with respect to a client device **1102.** In this example, the relative position of each player is incorporated into the game, with at least one player able to see an overview of the relative positions of each player. While the devices are shown to be facing each other in this example, it should be understood that the orientation of the devices might change and can in some embodiments correspond to the direction in which each player in the game is facing. In this example, each player might be able to see the overview as illustrated on the client device **1102,** where the game shows the character **1108** for the client device **1102** as well as the players **1110, 1112** for the other devices **1104, 1106,** positioned in the game based on the physical relative locations. In some embodiments, only the player of the client device **1102** will receive this overview, with each other player seeing a conventional first- or third-person view of the game corresponding to their respective player. In this example, the player of the client device might correspond to a "general" giving orders to "privates" under the general's command, where it is advantageous for the general to see the relative positions of each of the privates in order to tell one to advance, one to hold, etc. As discussed, the infrared or similar communication can be used for relative position tracking and identification, and the same or a different communication method can be used to transfer or synchronize gaming information.

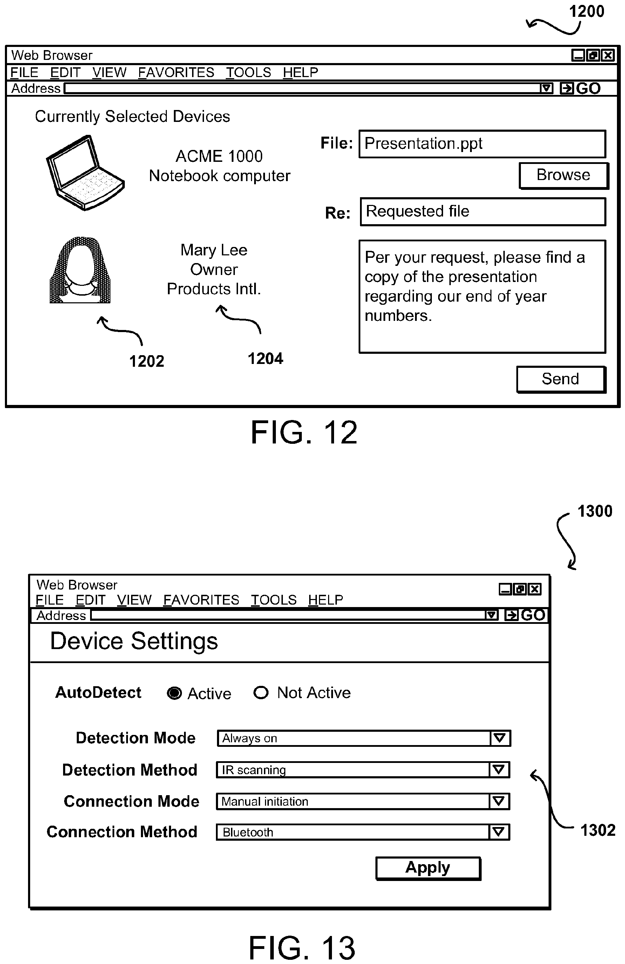

In addition to the interface displays discussed above, a client device can include applications or interface pages that include additional functionality that can be used with the displays and information discussed above. For example, situations were described in which a user of a client device might want to share a file with specific users of detected devices. As discussed, the user of the client device can select one or more detected devices to receive the file by selecting on the appropriate icons. **FIG. 12** illustrates an example of a page of information **1200** that might be displayed on a client device in response to such a selection. In this example, a copy of the image or icon **1202** for each selected user or device can be displayed, as well as identifying information **1204** for each selected user. The displayed information can help the user of the client device to ensure that the file is going to be transmitted to the appropriate devices, and enables the user to add or remove devices as necessary. The display screen also can include any other appropriate elements, such as to select a file to send to those users and provide comments, instructions, or any other appropriate information. As discussed, the file can be sent using any appropriate communication technology, and need not be transmitted using the approach that was used to determine the identity and/or location of the nearby devices.

**FIG. 13** illustrates an example interface page **1300** that enables a user of a client device to specify various aspects of the detection and communication processes of the client device. It should be understood that the figure merely includes a sample selection of configurable options **1302** for explanation, and that a number of additional or alternative parameters or options could be utilized within the scope of the various embodiments. In this example, the user is able to activate or deactivate the automatic detection of nearby devices, as well as to specify way in which the device detects and/or connects with these nearby devices. In this example, the user has specified to have the client device always scanning for client devices using at least one infrared element of the client device. The user has also indicated that the client device should connect to these detected devices only when instructed by the user, and that once detected and identified the devices should communicate using Bluetooth protocol. As should be understood, various options for each element can be provided as discussed or suggested elsewhere herein.

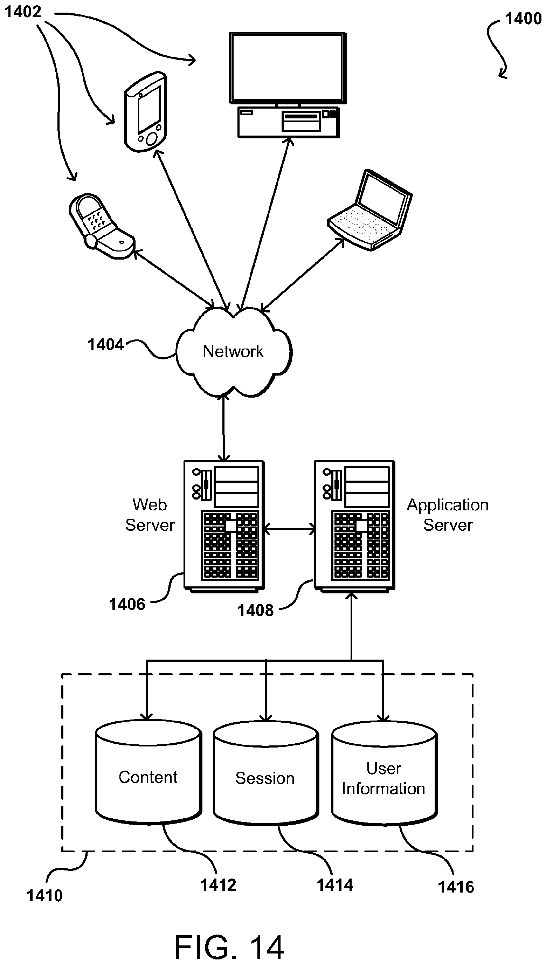

In accordance with the various embodiments discussed above, various environments and technologies can be utilized as appropriate or desirable for various applications. For example, **FIG. 14** illustrates an example of an environment **1400** for implementing aspects in accordance with various embodiments. As will be appreciated, although a Web-based environment is used for purposes of explanation, different environments may be used, as appropriate, to implement various embodiments. The environment **1400** shown includes a variety of electronic client devices **1402,** which can include any appropriate device operable to send and receive requests, messages, or information over an appropriate network **1404** and convey information back to a user of the device. As discussed, at least some of these devices can also include components enabling the devices to communicate directly with each other via wireless communication. Examples of such client devices include personal computers, cell phones, handheld messaging devices, laptop computers, set-top boxes, personal data assistants, electronic book readers, and the like. Each client device can be capable of running at least one motion or orientation-controlled interface as discussed or suggested herein. In some cases, at least some functionality will be generated and/or managed on at least one client device. In other embodiments, at least some of the functionality or content will be generated and/or managed over at least one network **1404.**

The network **1404** can include any appropriate network, including an intranet, the Internet, a cellular network, a local area network, or any other such network or combination thereof. Components used for such a system can depend at least in part upon the type of network and/or environment selected. Protocols and components for communicating via such a network are well known and will not be discussed herein in detail. Communication over the network can be enabled by wired or wireless connections, and combinations thereof. In this example, the network includes the Internet, as the environment includes a content provider system including least one Web server **1406** for receiving requests from a client device **1402** and serving content in response thereto, although for other networks an alternative device serving a similar purpose could be used as would be apparent to one of ordinary skill in the art.

The provider system can also include at least one application server **1408** or other such server in communication with at least one data store **1410.** It should be understood that there can be several application servers, layers, and/or other elements, processes, or components, which may be chained or otherwise configured, which can interact to perform tasks such as obtaining data from an appropriate data store. As used herein the term "data store" refers to any device or combination of devices capable of storing, accessing, and retrieving data, which may include any combination and number of data servers, databases, data storage devices, and data storage media, in any standard, distributed, or clustered environment. An application server can include any appropriate hardware and software for integrating with the data store as needed to execute aspects of one or more applications for the client device, handling a majority of the data access and business logic for an application. The application server provides access control services in cooperation with the data store, and is able to generate content such as text, graphics, audio, and/or video to be transferred to the user, which may be served to the user by the Web server in the form of HTML, XML, or another appropriate structured language in this example. The handling of all requests and responses, as well as the delivery of content between the client device **1402** and an application server, can be handled by the respective Web server. It should be understood that the Web and application servers are not required and are merely example components, as structured code discussed herein can be executed on any appropriate device or host machine as discussed elsewhere herein. Further, the environment can be architected in such a way that a test automation framework can be provided as a service to which a user or application can subscribe. A test automation framework can be provided as an implementation of any of the various testing patterns discussed herein, although various other implementations can be used as well, as discussed or suggested herein.

Each data store can include several separate data tables, databases, or other data storage mechanisms and media for storing data relating to a particular aspect. For example, a content data store **1412** illustrated includes content that might be accessed or shared by a user of a client device. The user data store **1416** includes identification data and/or security information useful for validating specific users or associating users with specific devices. A session data store **1414** can store any appropriate information for a session, such as which devices participated or were detected, what information was obtained for each device, etc. It should be understood that there can be many other aspects that may need to be stored in a data store, such as access right information, which can be stored in any of the above listed mechanisms as appropriate or in additional mechanisms in the data store. Each data store is operable, through logic associated therewith, to receive instructions from a respective application server and obtain, update, or otherwise process data in response thereto. In one example, a user might submit a search request for a certain type of content. In this case, the data store might access the user information to verify the identity of the user, and can access the content information to obtain information about instances of that type of content. The information then can be returned to the user, such as in a message or on a Web page that the user is able to view via a browser on the client device **1402.**

Each server typically will include an operating system that provides executable program instructions for the general administration and operation of that server, and typically will include a computer-readable medium storing instructions that, when executed by a processor of the server, allow the server to perform its intended functions. Suitable implementations for the operating system and general functionality of the servers are known or commercially available, and are readily implemented by persons having ordinary skill in the art, particularly in light of the disclosure herein.

The environment in one embodiment is a distributed computing environment utilizing several computer systems and components that are interconnected via communication links, using one or more computer networks or direct connections. However, it will be appreciated by those of ordinary skill in the art that such a system could operate equally well in a system having fewer or a greater number of components than are illustrated in **FIG. 14****.** Thus, the depiction of the system **1400** in **FIG. 14** should be taken as being illustrative in nature, and not limiting to the scope of the disclosure.

Various embodiments discussed or suggested herein can be implemented in a wide variety of operating environments, which in some cases can include one or more user computers, computing devices, or processing devices which can be used to operate any of a number of applications. User or client devices can include any of a number of general purpose personal computers, such as desktop or laptop computers running a standard operating system, as well as cellular, wireless, and handheld devices running mobile software and capable of supporting a number of networking and messaging protocols. Such a system also can include a number of workstations running any of a variety of commercially-available operating systems and other known applications for purposes such as development and database management. These devices also can include other electronic devices, such as dummy terminals, thin-clients, gaming systems, and other devices capable of communicating via a network.

Most embodiments utilize at least one network that would be familiar to those skilled in the art for supporting communications using any of a variety of commercially-available protocols, such as TCP/IP, OSI, FTP, UPnP, NFS, CIFS, and AppleTalk. The network can be, for example, a local area network, a wide-area network, a virtual private network, the Internet, an intranet, an extranet, a public switched telephone network, an infrared network, a wireless network, and any combination thereof.

In embodiments utilizing a Web server, the Web server can run any of a variety of server or mid-tier applications, including HTTP servers, FTP servers, CGI servers, data servers, Java servers, and business application servers. The server(s) also may be capable of executing programs or scripts in response requests from user devices, such as by executing one or more Web applications that may be implemented as one or more scripts or programs written in any programming language, such as Java^{®}, C, C# or C++, or any scripting language, such as Perl, Python, or TCL, as well as combinations thereof. The server(s) may also include database servers, including without limitation those commercially available from Oracle^{®}, Microsoft^{®}, Sybase^{®}, and IBM^{®}.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network ("SAN") familiar to those skilled in the art. Similarly, any necessary files for performing the functions attributed to the computers, servers, or other network devices may be stored locally and/or remotely, as appropriate. Where a system includes computerized devices, each such device can include hardware elements that may be electrically coupled via a bus, the elements including, for example, at least one central processing unit (CPU), at least one input device (e.g., a mouse, keyboard, controller, touch screen, or keypad), and at least one output device *(e.g.,* a display device, printer, or speaker). Such a system may also include one or more storage devices, such as disk drives, optical storage devices, and solid-state storage devices such as random access memory ("RAM") or read-only memory ("ROM"), as well as removable media devices, memory cards, flash cards, etc.

Such devices also can include a computer-readable storage media reader, a communications device (e.g., a modem, a network card (wireless or wired), an infrared communication device, etc.), and working memory as described above. The computer-readable storage media reader can be connected with, or configured to receive, a computer-readable storage medium, representing remote, local, fixed, and/or removable storage devices as well as storage media for temporarily and/or more permanently containing, storing, transmitting, and retrieving computer-readable information. The system and various devices also typically will include a number of software applications, modules, services, or other elements located within at least one working memory device, including an operating system and application programs, such as a client application or Web browser. It should be appreciated that alternate embodiments may have numerous variations from that described above. For example, customized hardware might also be used and/or particular elements might be implemented in hardware, software (including portable software, such as applets), or both. Further, connection to other computing devices such as network input/output devices may be employed.

Storage media and computer readable media for containing code, or portions of code, can include any appropriate media known or used in the art, including storage media and communication media, such as but not limited to volatile and non-volatile, removable and non-removable media implemented in any method or technology for storage and/or transmission of information such as computer readable instructions, data structures, program modules, or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices, or any other medium which can be used to store the desired information and which can be accessed by a system device. Based on the disclosure and teachings provided herein, a person of ordinary skill in the art will appreciate other ways and/or methods to implement the various embodiments.

The specification and drawings are, accordingly, to be regarded in an illustrative rather than a restrictive sense. It will, however, be evident that various modifications and changes may be made thereunto without departing from the scope of the invention as set forth in the claims

## Claims

1. A computer-implemented method of automatically identifying nearby devices, comprising:
under control of one or more computing systems configured with executable instructions,
capturing at least one image using at least one capture element (312, 314, 316) of a client device (310);
analyzing the at least one image to determine a presence of at least one computing device (302, 304, 306, 308) and a relative location including a direction and distance of the at least one computing device with respect to the client device;
sending a request to the at least one computing device;
receiving a response from at least one responding computing device, the response including identifying information for an associated computing device; and
providing for display a user interface including a graphical element (318, 320, 322, 324) for the at least one responding computing device, the graphical element positioned on the user interface to correspond to the determined relative location of the associated computing device,
whereby a user of the client device is able to view identity information for the at least one
responding computing device, or a user of the at least one responding computing device, without manual intervention;
wherein the method further comprises determining a communication mechanism for
communicating with the at least one responding computing device using the at least one captured image.

2. The computer-implemented method of claim 1, wherein the communication mechanism for the responding computing device is further determined using at least the identifying information.

3. The computer-implemented method of claims 1 or 2, wherein the communication mechanism is a wireless communication mechanism.

4. The computer-implemented method of any one of claims 1 to 3, wherein the at least one capture element is operable to capture images using at least one of ambient light and infrared radiation.

5. The computer-implemented method of any one of claims 1 to 4, wherein the image capture element comprises a transmitter and a receiver operating to transmit and receive communications of a type of optical transmission, the request being sent using the type of optical transmission.

6. The computer-implemented method of any one of claims 1 to 5, wherein the client device includes a plurality of image capture devices positioned to capture images in substantially any direction around the client device.

7. The computer-implemented method of any one of claims 1 to 6, wherein at least one image capture element includes a wide angle lens.

8. The computer-implemented method of any one of claims 1 to 7, wherein the client device is operable to utilize the determined relative position of the at least one responding computing device as input to an application.

9. The computer-implemented method of any one of claims 1 to 8, wherein the identity information includes at least one of a name of the user, an occupation of the user, an employer of the user, a picture of the user, and personal information about the user.

10. The computer-implemented method of any one of claims 1 to 9, wherein the client device is operable to communicate with a remote data source to obtain the identity information based at least in part upon the identifying information received in the response.

11. The computer-implemented method of any one of claims 1 to 10, wherein the user of the client device is able to allow or deny communication with a responding computing device by selecting an associated graphical element.

12. A client device (100, 310), comprising:
a processor (202);
at least one image capture element (102, 312, 314, 316);
a display element (206); and
a memory device including instructions that, when executed by the processor, cause the client device to:
capture at least one image using the at least one capture element of a client device;
analyze the at least one image to determine a presence of at least one computing
device and a relative location including a direction and distance of the at least one computing device with respect to the client device;
send a request to the at least one computing device;
receive a response from at least one responding computing device, the response including identifying information for an associated computing device; and provide for display via the display element a user interface including a graphical element for the at least one responding computing device, the graphical element positioned on the user interface to correspond to the determined relative location of the associated computing device,
whereby a user of the client device is able to view identity information for the at least one
responding computing device, or a user of the at least one responding computing device, without manual intervention;
wherein the instructions, when executed by the processor, further cause the client device to determine a communication mechanism for communicating with the at least one responding computing device using the at least one captured image.

13. The client device of claim 12, wherein the instructions when executed further cause the client device to determine the communication mechanism using at least the identifying information.

14. The client device of claim 12, wherein the at least one capture element is operable to capture images using at least one of ambient light and infrared radiation.

15. The client device of claim 12, wherein the image capture element comprises a transmitter and a receiver operating to transmit and receive communications of a type of optical transmission, the request being sent using the type of optical transmission.

16. The client device of claim 12, wherein the client device includes a plurality of image capture devices positioned to capture images in substantially any direction around the client device.

## Patentansprüche

1. Computerimplementiertes Verfahren zur automatischen Identifizierung von in der Nähe befindlichen Vorrichtungen, das Folgendes umfasst:
unter der Steuerung eines oder mehrerer Computersysteme, die mit ausführbaren Befehlen konfiguriert sind,
Erfassen mindestens eines Bildes unter Verwendung mindestens eines Erfassungselements (312, 314, 316) einer Client-Vorrichtung (310);
Analysieren des mindestens einen Bildes, um ein Vorhandensein von mindestens einer Computervorrichtung (302, 304, 306, 308) und einen relativen Standort einschließlich einer Richtung und eines Abstands der mindestens einen Computervorrichtung in Bezug auf die Client-Vorrichtung zu bestimmen;
Senden einer Anfrage an die mindestens eine Computervorrichtung;
Empfangen einer Antwort von mindestens einer antwortenden Computervorrichtung, wobei die Antwort Identifizierungsinformationen für eine zugehörige Computervorrichtung umfasst; und
Bereitstellen für die Anzeige einer Benutzerschnittstelle, die ein grafisches Element (318, 320, 322, 324) umfasst, für die mindestens eine antwortende Computervorrichtung, wobei das grafische Element auf der Benutzerschnittstelle so positioniert ist, dass es dem bestimmten relativen Standort der zugehörigen Computervorrichtung entspricht,
wodurch ein Benutzer der Client-Vorrichtung in der Lage ist, Identitätsinformationen für die mindestens eine antwortende Computervorrichtung oder einen Benutzer der mindestens einen antwortenden Computervorrichtung ohne manuellen Eingriff zu sehen;
wobei das Verfahren ferner das Bestimmen eines Kommunikationsmechanismus zum Kommunizieren mit der mindestens einen antwortenden Computervorrichtung unter Verwendung des mindestens einen erfassten Bildes umfasst.

2. Computerimplementiertes Verfahren nach Anspruch 1, wobei der Kommunikationsmechanismus für die antwortende Computervorrichtung ferner unter Verwendung mindestens der Identifizierungsinformationen bestimmt wird.

3. Computerimplementiertes Verfahren nach Anspruch 1 oder 2, wobei der Kommunikationsmechanismus ein drahtloser Kommunikationsmechanismus ist.

4. Computerimplementiertes Verfahren nach einem der Ansprüche 1 bis 3, wobei das mindestens eine Erfassungselement dafür ausgelegt ist, Bilder unter Verwendung von Umgebungslicht und/oder Infrarotstrahlung zu erfassen.

5. Computerimplementiertes Verfahren nach einem der Ansprüche 1 bis 4, wobei das Bilderfassungselement einen Sender und einen Empfänger umfasst, die zum Senden und Empfangen von Nachrichten eines optischen Übertragungstyps betrieben werden, wobei die Anfrage unter Verwendung des optischen Übertragungstyps gesendet wird.

6. Computerimplementiertes Verfahren nach einem der Ansprüche 1 bis 5, wobei die Client-Vorrichtung eine Vielzahl von Bilderfassungsvorrichtungen umfasst, die so positioniert sind, dass sie Bilder in im Wesentlichen jeder Richtung um die Client-Vorrichtung herum erfassen.

7. Computerimplementiertes Verfahren nach einem der Ansprüche 1 bis 6, wobei mindestens ein Bilderfassungselement ein Weitwinkelobjektiv umfasst.

8. Computerimplementiertes Verfahren nach einem der Ansprüche 1 bis 7, wobei die Client-Vorrichtung dafür ausgelegt ist, die bestimmte relative Position der mindestens einen antwortenden Computervorrichtung als Eingabe für eine Anwendung zu verwenden.

9. Computerimplementiertes Verfahren nach einem der Ansprüche 1 bis 8, wobei die Identitätsinformationen mindestens einen Namen des Benutzers, einen Beruf des Benutzers, einen Arbeitgeber des Benutzers, ein Bild des Benutzers und persönliche Informationen über den Benutzer umfassen.

10. Computerimplementiertes Verfahren nach einem der Ansprüche 1 bis 9, wobei die Client-Vorrichtung dafür ausgelegt ist, mit einer entfernten Datenquelle zu kommunizieren, um die Identitätsinformationen zumindest teilweise basierend auf den Identifizierungsinformationen zu erhalten, die in der Antwort empfangen wurden.

11. Computerimplementiertes Verfahren nach einem der Ansprüche 1 bis 10, wobei der Benutzer der Client-Vorrichtung in der Lage ist, die Kommunikation mit einer antwortenden Computervorrichtung durch Auswählen eines zugehörigen grafischen Elements zuzulassen oder zu verweigern.

12. Client-Vorrichtung (100, 310), die Folgendes umfasst:
einen Prozessor (202);
mindestens ein Bilderfassungselement (102, 312, 314, 316);
ein Anzeigeelement (206); und
eine Speichervorrichtung, die Anweisungen umfasst, die, wenn sie von dem Prozessor ausgeführt werden, die Client-Vorrichtung zu Folgendem veranlassen:
Erfassen mindestens eines Bildes unter Verwendung des mindestens einen Erfassungselements einer Client-Vorrichtung;
Analysieren des mindestens einen Bildes, um ein Vorhandensein von mindestens einer Computervorrichtung und einen relativen Standort einschließlich einer Richtung und eines Abstands der mindestens einen Computervorrichtung in Bezug auf die Client-Vorrichtung zu bestimmen;
Senden einer Anfrage an die mindestens eine Computervorrichtung;
Empfangen einer Antwort von mindestens einer antwortenden Computervorrichtung, wobei die Antwort Identifizierungsinformationen für eine zugehörige Computervorrichtung umfasst; und
Bereitstellen einer Benutzerschnittstelle, die ein grafisches Element für die mindestens eine antwortende Computervorrichtung umfasst, zur Anzeige über das Anzeigeelement, wobei das grafische Element auf der Benutzerschnittstelle so positioniert ist, dass es dem bestimmten relativen Standort der zugehörigen Computervorrichtung entspricht,
wodurch ein Benutzer der Client-Vorrichtung in der Lage ist, Identitätsinformationen für die mindestens eine antwortende Computervorrichtung oder einen Benutzer der mindestens einen antwortenden Computervorrichtung ohne manuellen Eingriff zu sehen;
wobei die Anweisungen, wenn sie von dem Prozessor ausgeführt werden, ferner bewirken, dass die Client-Vorrichtung einen Kommunikationsmechanismus zum Kommunizieren mit der mindestens einen antwortenden Computervorrichtung unter Verwendung des mindestens einen erfassten Bildes bestimmt.

13. Client-Vorrichtung nach Anspruch 12, wobei die Anweisungen, wenn sie ausgeführt werden, ferner die Client-Vorrichtung veranlassen, den Kommunikationsmechanismus unter Verwendung mindestens der Identifizierungsinformationen zu bestimmen.

14. Client-Vorrichtung nach Anspruch 12, wobei das mindestens eine Erfassungselement dafür ausgelegt ist, Bilder unter Verwendung von Umgebungslicht und/oder Infrarotstrahlung zu erfassen.

15. Client-Vorrichtung nach Anspruch 12, wobei das Bilderfassungselement einen Sender und einen Empfänger umfasst, die zum Senden und Empfangen von Nachrichten eines optischen Übertragungstyps betrieben werden, wobei die Anfrage unter Verwendung des optischen Übertragungstyps gesendet wird.

16. Client-Vorrichtung nach Anspruch 12, wobei die Client-Vorrichtung eine Vielzahl von Bilderfassungsvorrichtungen umfasst, die so positioniert sind, dass sie Bilder in im Wesentlichen jeder Richtung um die Client-Vorrichtung herum erfassen.

## Revendications

1. Procédé informatique d'identification automatique de dispositifs à proximité, comprenant :
sous le contrôle d'un ou plusieurs systèmes informatiques configurés avec des instructions exécutables, la capture d'au moins une image en utilisant au moins un élément de capture (312, 314, 316) d'un dispositif client (310) ;
l'analyse de l'au moins une image pour déterminer une présence d'au moins un dispositif informatique (302, 304, 306, 308) et un emplacement relatif comprenant une direction et une distance de l'au moins un dispositif informatique par rapport au dispositif client ;
l'envoi d'une demande à l'au moins un dispositif informatique ;
la réception d'une réponse à partir d'au moins un dispositif informatique répondant, la réponse comprenant des informations d'identification pour un dispositif informatique associé ; et
la fourniture pour l'affichage d'une interface utilisateur comprenant un élément graphique (318, 320, 322, 324) pour l'au moins un dispositif informatique répondant, l'élément graphique étant positionné sur l'interface utilisateur pour correspondre à l'emplacement relatif déterminé du dispositif informatique associé, moyennant quoi un utilisateur du dispositif client est capable de visualiser des informations d'identité pour l'au moins un dispositif informatique répondant, ou un utilisateur de l'au moins un dispositif informatique répondant, sans intervention manuelle ;
dans lequel le procédé comprend en outre la détermination d'un mécanisme de communication pour communiquer avec l'au moins un dispositif informatique répondant en utilisant l'au moins une image capturée.

2. Procédé informatique selon la revendication 1, dans lequel le mécanisme de communication pour le dispositif informatique répondant est en outre déterminé en utilisant au moins les informations d'identification.

3. Procédé informatique selon les revendications 1 ou 2, dans lequel le mécanisme de communication est un mécanisme de communication sans fil.

4. Procédé informatique selon l'une quelconque des revendications 1 à 3, dans lequel l'au moins un élément de capture est utilisable pour capturer des images en utilisant au moins l'un parmi la lumière ambiante et le rayonnement infrarouge.

5. Procédé informatique selon l'une quelconque des revendications 1 à 4, dans lequel l'élément de capture d'image comprend un émetteur et un récepteur fonctionnant pour transmettre et recevoir des communications d'un type de transmission optique, la demande étant envoyée en utilisant le type de transmission optique.

6. Procédé informatique selon l'une quelconque des revendications 1 à 5, dans lequel le dispositif client comprend une pluralité de dispositifs de capture d'image positionnés pour capturer des images dans sensiblement n'importe quelle direction autour du dispositif client.

7. Procédé informatique selon l'une quelconque des revendications 1 à 6, dans lequel au moins un élément de capture d'image comprend un objectif grand angle.

8. Procédé informatique selon l'une quelconque des revendications 1 à 7, dans lequel le dispositif client est utilisable pour utiliser la position relative déterminée de l'au moins un dispositif informatique répondant comme entrée dans une application.

9. Procédé informatique selon l'une quelconque des revendications 1 à 8, dans lequel les informations d'identité comprennent au moins un parmi un nom de l'utilisateur, une profession de l'utilisateur, un employeur de l'utilisateur, une photo de l'utilisateur, et des informations personnelles sur l'utilisateur.

10. Procédé informatique selon l'une quelconque des revendications 1 à 9, dans lequel le dispositif client est utilisable pour communiquer avec une source de données distante pour obtenir les informations d'identité sur la base au moins en partie des informations d'identification reçues dans la réponse.

11. Procédé informatique selon l'une quelconque des revendications 1 à 10, dans lequel l'utilisateur du dispositif client est capable d'autoriser ou de refuser la communication avec un dispositif informatique répondant en sélectionnant un élément graphique associé.

12. Dispositif client (100, 310), comprenant :
un processeur (202) ;
au moins un élément de capture d'image (102, 312, 314, 316) ;
un élément d'affichage (206) ; et
un dispositif de mémoire comprenant des instructions qui, lorsqu'elles sont exécutées par le processeur, amènent le dispositif client à :
capturer au moins une image en utilisant l'au moins un élément de capture d'un dispositif client ;
analyser l'au moins une image pour déterminer la présence d'au moins un dispositif informatique et un emplacement relatif comprenant une direction et une distance de l'au moins un dispositif informatique par rapport au dispositif client ;
envoyer une demande à l'au moins un dispositif informatique ;
recevoir une réponse à partir d'au moins un dispositif informatique répondant, la réponse comprenant des informations d'identification pour un dispositif informatique associé ; et
fournir pour l'affichage via l'élément d'affichage une interface utilisateur comprenant un élément graphique pour l'au moins un dispositif informatique répondant, l'élément graphique étant positionné sur l'interface utilisateur pour correspondre à l'emplacement relatif déterminé du dispositif informatique associé,
moyennant quoi un utilisateur du dispositif client est capable de visualiser des informations d'identité pour l'au moins un dispositif informatique répondant, ou un utilisateur de l'au moins un dispositif informatique répondant, sans intervention manuelle ;
dans lequel les instructions, lorsqu'elles sont exécutées par le processeur, amènent en outre le dispositif client à déterminer un mécanisme de communication pour communiquer avec l'au moins un dispositif informatique répondant en utilisant l'au moins une image capturée.

13. Dispositif client selon la revendication 12, dans lequel les instructions, lorsqu'elles sont exécutées, amènent en outre le dispositif client à déterminer le mécanisme de communication en utilisant au moins les informations d'identification.

14. Dispositif client selon la revendication 12, dans lequel l'au moins un élément de capture est utilisable pour capturer des images en utilisant au moins l'un parmi la lumière ambiante et le rayonnement infrarouge.

15. Dispositif client selon la revendication 12, dans lequel l'élément de capture d'image comprend un émetteur et un récepteur fonctionnant pour émettre et recevoir des communications d'un type de transmission optique, la demande étant envoyée en utilisant le type de transmission optique.

16. Dispositif client selon la revendication 12, dans lequel le dispositif client comprend une pluralité de dispositifs de capture d'image positionnés pour capturer des images dans sensiblement n'importe quelle direction autour du dispositif client.
